(19) Europäisches Patentamt
European Patent Office
Office européen des brevets

(11) **EP 0 967 742 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(51) Int Cl.:
*H04B 7/26* (2006.01)    *H04Q 7/38* (2006.01)
*H04B 7/005* (2006.01)

(21) Anmeldenummer: **99201946.3**

(22) Anmeldetag: **18.06.1999**

(54) **Drahtloses Netzwerk**

Wireless Network

Réseau sans fil

(84) Benannte Vertragsstaaten:
**DE FR GB IT**

(30) Priorität: **25.06.1998 DE 19828226**
         **27.11.1998 DE 19854820**

(43) Veröffentlichungstag der Anmeldung:
**29.12.1999 Patentblatt 1999/52**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA Eindhoven (NL)**
Benannte Vertragsstaaten:
**FR GB IT**

(72) Erfinder:
• **Yonggang, Du Dr.-Ing.
Röntgenstrasse 24,
22335 Hamburg (DE)**
• **Christoph, Herrmann Dr.-Ing.
Röntgenstrasse 24,
22335 Hamburg (DE)**

(74) Vertreter: **Volmer, Georg et al
Philips Intellectual Property & Standards GmbH,
Postfach 50 04 42
52088 Aachen (DE)**

(56) Entgegenhaltungen:
EP-A- 0 633 671           EP-A- 0 765 096
WO-A-98/18280             US-A- 5 430 760

• GUO Q ET AL: "AGGRESSIVE PACKET RESERVATION MULTIPLE ACCESS USING SIGNATURES" IEEE INTERNATIONAL SYMPOSIUM ON PERSONAL, INDOOR AND MOBILE RADIO COMMUNICATIONS, XX, XX, Bd. 4, 18. September 1994 (1994-09-18), Seiten 1247-1253, XP002027584
• NIKULA E ET AL: "FRAMES MULTIPLE ACCESS FOR UMTS AND IMT-2000" IEEE PERSONAL COMMUNICATIONS, IEEE COMMUNICATIONS SOCIETY, US, Bd. 5, Nr. 2, 1. April 1998 (1998-04-01), Seiten 16-24, XP000751831 ISSN: 1070-9916
• PROAKIS: "Digital Communications, ISBN 0-07-100269-3" 1989 , MCGRAW-HILL XP002254184 * Seite 832 - Seite 836 *

EP 0 967 742 B1

**Beschreibung**

Die Erfindung bezieht sich auf ein drahtloses Netzwerk mit mindestens einer Basisstation und mehreren zugeordneten Terminals zum Austausch von Nutz- und Steuerdaten.

In dem Dokument "ETSI SMG2, Meeting no 24, Cork Ireland, 1-5 December 1997, Tdoc SMG2 359/97, Concept Group Alpha - Wideband Direct-Sequence CDMA (WCDMA), EVALUATION DOCUMENT (3.0), Part 1: System Description, Performance Evaluation" wird ein nach dem CDMA-Verfahren (CDMA = Code Division Multiplex Access) arbeitendes Funknetzwerk vorgeschlagen. Das Funknetzwerk besteht aus mehreren Funkzellen mit jeweils einer Basisstation und darin befindlichen Terminals oder Mobilstationen. Nach der Registrierung und Synchronisierung eines Terminals, sendet ein Terminal beispielsweise bei Anforderung eines Nutzkanals ein Meldungspaket (Random-Access burst) über einen Zufallskanal (RACH = Random Access Channel). Das Meldungspaket besteht aus einem Präambelteil (Preamble part) und einem Datenteil (Data part). Der Präambelteil besteht aus 16 Symbolen (Präambelsequenz/ Preamble sequence), die durch einen orthogonalen Gold-Code (Präambel-Code/ Preamble code) gespreizt ist. Der orthogonale Gold-Code enthält 256 Chipintervalle. Der Datenteil enthält ein Feld mit einer Identifizierung für das Terminal, ein Feld zur Kennzeichnung des angeforderten Dienstes (Übertragung kurzer Pakete/ short packet transmission, Verbindungswunsch für einen dedizierten Nutzkanal/ dedicated-channel set-up usw.), ein optionales Feld für Datenpakete (Optional user packet) und ein CRC-Feld zur Fehlerdetektierung. Ein von einer Basisstation empfangenes Meldungspaket wird über ein Matched-Filter, einen Präambel-Korrelator (Preamble correlator), einen Impulsdetektor (Peak detector) zu einem den Zeitverlauf des Datenteils abschätzenden Schaltungsteil geliefert, welches eine RAKE-Schaltung zur Auswertung des Datenteils steuert. Es wird hier also eine auf einer Korrelation basierende Impulsdetektion mit anschließender Nachrichtendecodierung angewendet. Für die einer Basisstation zugeordneten Terminals stehen 80 Zufallskanäle zur Verfügung. Diese Kanäle werden durch 16 unterschiedliche Präambel-Codes und 5 unterschiedliche Sendezeitpunkte bestimmt. Senden zwei oder mehrere Terminals über denselben Zufallskanal, d.h. es wird derselbe Präambel-Code und Sendezeitpunkt gewählt, entsteht eine Kollision und die von den Terminals ausgesendeten Informationen können von der Basisstation nicht korrekt ausgewertet werden. Solche Kollisionen sind insbesondere bei hohen Verkehrsbelastungen wahrscheinlich.

Die EP 0 633 671 beschreibt eine Vorrichtung bei der Mobilstationen unterschiedliche Bitsequenzen aufweisen, die zur Erkennung von Zugriffsanfragen in der Basisstation verwendet werden. Die Zugriffssequenzen sind orthogonal zueinander. Die Basisstation weist eine Vorrichtung zur Korrelation und zur Erkennung einer Zugriffsanfrage für einen Nutzkanal für die Mobilstation auf.

Der Artikel "Frames Multiple Access for UMTS and IMT200" von Nikula et al, IEEE Personal Communications, IEEE Communications Society, US, Bd.5 Nr.2, 1.04.1998 beschreibt einen Mehrfachzugriff für UMTS, bei dem zwei verschiedene Arten von Access-Bursts verwendet werden, die unterschiedlich lang sind.

Der Erfindung liegt die Aufgabe zugrunde, ein drahtloses Netzwerk zu schaffen, bei dem ein Terminal auf eine andere Art Signalisierungsinformationen mit der zugeordneten Basisstation austauscht.

Die Aufgabe wird durch die Merkmale der unabhängigen Ansprüche gelöst.

Unter dem erfindungsgemäßen drahtlosen Netzwerk ist ein Netzwerk mit mehreren Funkzellen zu verstehen, in denen jeweils eine Basisstation und mehrere Terminals Steuer-und Nutzdaten drahtlos übertragen. Eine drahtlose Übertragung dient zur Übertragung von Informationen z.B. über Funk-, Ultraschall- oder Infrarotwege.

Nach der Registrierung und Synchronisierung muss ein Terminal zur Übertragung von Nutzdaten einen bestimmten Nutzkanal bei der zugeordneten Basisstation anfordern. Ein solcher Nutzkanal kann beispielsweise ein dedizierter Nutzkanal (z.B. zur Sprachübertragung) entweder zwischen Basisstation und Terminal oder zwischen zwei Terminals sein. Die Zuweisung der Kanäle nimmt die Basisstation vor. Erfindungsgemäss wird von einem Terminal über einen von der Basisstation vorgegebenen Signalisierungskanal eine Anforderung z.B. nach einem dedizierten Nutzkanal übertragen. Von der Basisstation muss wenigstens der Startzeitpunkt einer ggf. vorher bekannten Signalisierungssequenz den Terminals mitgeteilt werden. Es ist auch möglich, dass ausser dem Startzeitpunkt den Terminals auch eine von mehreren Signalisierungssequenzen zugewiesen wird. Eine solche Signalisierungssequenz ist eine Gold- oder Kasami-Sequenz mit guten Auto- und Kreuzkorrelationseigenschaften. In der Basisstation ist eine Vorrichtung (z.B. ein Matched-Filter) enthalten, in der eine Korrelation der empfangenen Signalisierungssequenzen durchgeführt wird. Der aus der Korrelation entstandene Impuls wird detektiert und einem Terminal zugeordnet. Da bei dem erfindungsgemäßen Netzwerk durch unterschiedliche Startzeitpunkte der Signalisierungssequenzen eine Kollision vermieden wird und keine Nachrichtendecodierung nach einer auf einer Korrelation basierenden Impulsdetektion durchgeführt wird, sondern das Auftreten des aus der Signalisierungssequenz entstandenen Impulses als Signalisierungswunsch angesehen wird, kann eine Signalisierungsdetektion insbesondere bei hohen Verkehrsbelastungen robuster und schneller als beim Stand der Technik durchgeführt werden.

Zur Detektion einer Signalisierungssequenz wird in Abhängigkeit von dem Startzeitpunkt der Signalisierungssequenz und von den Kanaleigenschaften ein bestimmter Zeitbereich zur Impulsdetektion gewählt. Ein solcher Zeitbereich wird als Detektionsfenster bezeichnet. Die Länge oder Dauer und der Startzeitpunkt des Detektionsfensters muß so gewählt werden, daß eine Impulsdektion möglich ist. Die Detektionsfenster sind kleiner als die Zeitdauer der aus dem Stand der Technik bekannten Meldungspakete. Mit der erfindungsgemäßen Signalisierung können also viele Terminals innerhalb eines kurzen Zeitbereiches einen Signalisierungswunsch absetzen.

Ein Terminal in einer Funkzelle hat nach der Registrierung und Synchronisierung für das Aussenden einer Signalisierungssequenz immer den gleichen Startzeitpunkt bezogen auf einen Referenzrahmen, solange die Basisstation diesen Startzeitpunkt nicht explizit ändert. Somit ist zunächst permanent für ein Terminal ein Signalisierungskanal belegt. Da in dem Referenzrahmen, der von kurzer Dauer (z.B. 10 ms) ist, viele solcher Startzeitpunkte enthalten sein können und da alle Terminals einer Funkzelle dieselbe Signalisierungssequenz verwenden, werden bei der permanenten Zuordnung eines Startzeitpunktes und einer Signalisierungssequenz zu einem Terminal, nur wenig Netzwerkresourcen verbraucht.

Die Signalisierungssequenzen aller Terminals in einer Funkzelle weisen unterschiedliche Startzeitpunkte auf. Es werden von jedem Terminal im einfachsten Fall die selben Signalisierungssequenzen verwendet. Die Signalisierungssequenzen können sich daher teilweise überlagern, da die Länge einer Sequenz in der Regel länger als der Abstand von zwei aufeinanderfolgenden Startzeitpunkten ist.

Ein Vorteil des erfindungsgemäßen Netzwerkes besteht auch in der Sicherheit des Erkennens eines Signalisierungswunsches. Es wird praktisch immer nach Sendung einer Signalisierungssequenz ein detektierbarer Impuls erzeugt. Das kommt daher, weil Störsignale und Kanalrauschen zu "künstlichen" Impulsen am Ausgang des Matched-Filters führen können. Es ist sehr unwahrscheinlich, daß diese die Amplitude der Impulse am Ausgang des Matched-Filters bei Empfang einer tatsächlich gesendeten Signalisierungssequenz verkleinern. Im schlechtesten Fall (z.B. bei Störungen) wird also ein Fehlalarm ausgelöst, wenn die Amplitude des Rausch- oder Störsignals die Detektionsschwelle überschreitet, ohne daß eine Signalisierungssequenz gesendet worden ist.

In Patentanspruch 2 werden die Merkmale zur Korrelation der Signalisierungssequenzen mit Hilfe eines Matched-Filters und die Detektion der Impulse mittels eines Impulsdetektors angegeben. Anspruch 3 gibt den Zeitpunkt der Sendung der für die Signalisierung zu verwendenden Signalisierungssequenz oder Signalisierungssequenzen und dessen oder deren Startzeitpunkte über einen Steuerkanal an. Hierbei ist zu beachten, daß die für die Signalisierung zu verwendende Signalisierungssequenz oder Signalisierungssequenzen nur einer Basisstation und nicht deren benachbarten Basisstationen zugeordnet sind. Als Signalisierungssequenz ist eine Kasami- oder Gold-Sequenz verwendbar (Anspruch 4). Das schließt aber nicht die Verwendung anderer orthogonaler Rechtecksignale aus.

Die Startzeitpunkte von gleichen Signalisierungssequenzen können entweder jeweils den gleichen konstanten Abstand oder einen individuell bestimmten Abstand aufweisen (Anspruch 5 und 6). Im ersten Fall hängt der konstante Abstand beispielsweise von den schlechtesten Kanaleigenschaften ab und im zweiten Fall von den jeweils vorliegenden Kanaleigenschaften zwischen Basisstation und dem betreffenden Terminal.

Ansprüche 7 und 8 geben die Merkmale zur Übertragung von einer 1-Bit- bzw. n-Bit-Signalisierungsinformation an (n > 1 und n ist eine ganze Zahl). Des weiteren ist es auch möglich, unterschiedliche Signalisierungssequenzen in einer Funkzelle auszusenden, wenn die Verkehrsbelastung sehr hoch ist und keine weitere Vergabe von Startzeitpunkten einer Signalisierungssequenz möglich ist (Anspruch 9).

Die Ansprüche 10 bis 12 beziehen sich auf Ausgestaltungen einer Basisstation und eines Terminals.

Das erfindungsgemäße drahtlose Netzwerk hat noch den Vorteil, daß die Amplitude der Signalisierungssequenz jeweils an bestimmte Netzwerkbedingungen angepaßt werden kann. Falls die Amplitude der Signalisierungssequenz zu niedrig ist, wird sie erhöht (Patentanspruch 13). Dies kann - wie in Patentanspruch 14 beschrieben ist - auch durch einen schrittweisen Anpassungsprozeß erfolgen. Dieser Prozeß endet, falls innerhalb einer vorgegebenen Zeit eine Rückmeldung von der zugeordneten Basisstation erfolgt ist oder die Signalisierungssequenz eine maximale Amplitude aufweist. Eine solche Rückmeldung ist beispielsweise die Zuweisung eines Nutzkanals für das Terminal.

Wenn die Amplitude der Signalisierungssequenz so klein wie möglich ist, kann unter Umständen die Fehler-Alarm-Rate (False Alarm Rate = FAR) erhöht werden. Eine Fehler-Alarm-Rate ist gleich der Wahrscheinlichkeit, daß der dem Matched-Filter nachgeschaltete Impulsdetektor einen Impuls detektiert, obwohl keine Signalisierungssequenz gesendet worden ist. Um eine solche fehlerhafte Detektierung zu vermeiden, sendet ein Terminal eine Signalisierungssequenz mehrfach aus und eine Basisstation gibt erst dann eine Rückmeldung an das Terminal, wenn diese die Signalisierungssequenz über mehrere Rahmen im dem Terminal zugewiesenen Detektionsfenster empfangen hat (Patentanspruch 15).

Weiter bezieht sich die Erfindung auch auf ein Verfahren zum Austausch von Nutz- und Steuerdaten in einem drahtlosen Netzwerk zwischen mindestens einer Basisstation und mehreren zugeordneten Terminals, eine Basisstation in einem drahtlosen Netzwerk zum Austausch von Nutz- und Steuerdaten mit mehreren zugeordneten Terminals und ein Terminal in einem drahtlosen Netzwerk zum Austausch von Nutz- und Steuerdaten mit mindestens einer Basisstation Ausführungsbeispiele der Erfindung werden nachstehend anhand der Fig. näher erläutert. Es zeigen:

| Fig. 1 | ein drahtloses Netzwerk mit mehreren Basisstationen und Terminals, |
| Fig. 2 und 3 | Folgen von Detektionsfenstern für ein in einer Basisstation verwendete Matched-Filter in Bezug auf einen Referenzrahmen, |
| Fig. 4 | zwei beispielhafte von zwei Terminals ausgesendete Signalisierungssequenzen und die entsprechenden Detektionsfenster, |
| Fig. 5 | die Position der aus der Detektierung von Signalisierungssequenzen gebildeten Impulse zur Übertragung von n-Bit-Signalisierungsinformationen, |
| Fig. 6 | einen Empfänger einer Basisstation, |
| Fig. 7 | einen Sender einer Basisstation, |
| Fig. 8 | einen Empfänger eines Terminals und |
| Fig. 9 | einen Sender eines Terminals. |

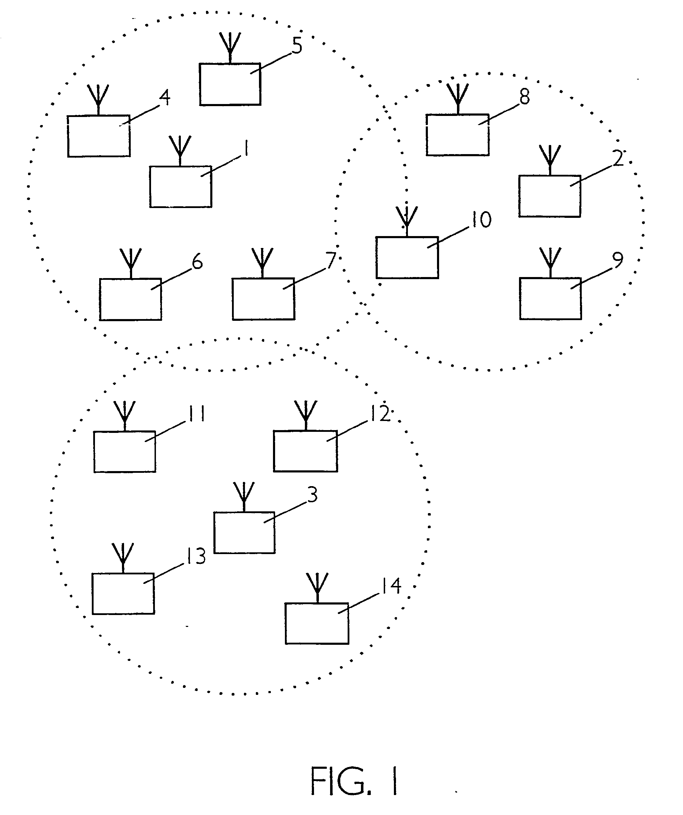

In Fig. 1 ist ein drahtloses Netzwerk, z.B. Funknetzwerk, mit mehreren Basisstationen 1 bis 3 und mehreren Terminals 4 bis 14 dargestellt. Einer Basisstation 1 bis 3 sind bestimmte Terminals 4 bis 14 zugeordnet. In dem in Fig. 1 dargestellten Beispiel sind der Basisstation 1 die Terminals 4 bis 7, der Basisstation 2 die Terminals 8 bis 10 und der Basisstation 3 die Terminals 11 bis 14 zugewiesen. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Die Terminals 4 bis 14 sind in der Regel Mobilstationen, die von einer fest installierten Basisstation 1 bis 3 gesteuert werden. Eine Basisstation 1 bis 3 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_C$ bezeichnet. $1/T_C$ ist die Chiprate. Die Multiplikation bzw. Modulation des Datensignals mit dem pseudo-zufälligen Rechtecksignal hat eine Spreizung des Spektrums um den Spreizungsfaktor $N_C = T/T_C$ zur Folge, wobei T die Dauer eines Rechteckimpulses des Datensignals ist.

Den Basisstationen sind bestimmte Funkzellen zugeordnet, in denen der Datenverkehr mit den jeweils in der Funkzelle befindlichen Terminals abgewickelt wird. Bewegt sich ein Terminal aus einer Funkzelle in eine andere Funkzelle, so wird nach bestimmten Vorgaben die Zuordnung des Terminals von einer zur anderen Basisstation abgewickelt. Dabei kann dieses Terminal gleichzeitig beim Übergang von einer zu einer anderen Funkzelle mit den Basisstationen der beiden Funkzellen Daten austauschen. Dies wird als Soft-Handover bezeichnet. Eine Funkzelle ist in Fig. 1 durch einen gestrichelt gezeichneten Kreis angedeutet.

Nutzdaten und Steuerdaten zwischen wenigstens einem Terminal und einer Basisstation werden über von der Basisstation vorgegebene Kanäle übertragen. Die Funkverbindung von der Basisstation zu den Terminals wird als Downlink und von den Terminals zur Basisstation als Uplink bezeichnet. Somit werden über Downlink-Kanäle Daten von der Basisstation zu den Terminals und über Uplink-Kanäle von Terminals zur Basisstation gesendet. Beispielsweise kann ein Downlink-Steuerkanal vorgesehen sein, der benutzt wird, um von der Basisstation Steuerdaten vor einem Verbindungsaufbau an alle Terminals zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal zur Basisstation kann beispielsweise ein von der Basisstation zugewiesener Uplink-Steuerkanal verwendet werden, auf den aber auch andere Terminals zugreifen können. Ein Uplink-Kanal, der von mehreren oder allen Terminals benutzt werden kann, wird als gemeinsamer Uplink-Kanal (common uplink channel) bezeichnet. Nach einem Verbindungsaufbau z.B. zwischen einem Terminal und der Basisstation werden Nutzdaten über einen Downlink- und ein Uplink-Nutzkanal übertragen. Zur direkten Übertragung von Nutzdaten zwischen zwei Terminals, werden Kanäle verwendet, die als Peer-to-Peer-Nutzkanäle bezeichnet werden. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Ein Kanal ist durch einen Frequenzbereich, einen Zeitbereich und z.B. beim CDMA-Verfahren durch einen Spreizungscode bestimmt. Damit Nutzdaten zwischen Basisstation und einem Terminal ausgetauscht werden können, ist es erforderlich, daß das Terminal mit der Basisstation synchronisiert wird. Beispielsweise ist aus dem GSM-System (GSM = Global System for Mobile communication) bekannt, in welchem eine Kombination aus FDMA- und TDMA-Verfahren benutzt wird, daß nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird.

Um eine Rahmensynchronisation durchführen zu können, müssen alle Terminals auf die Basisstation mit Hilfe von Impulsen, die von der Basisstation ausgesendet werden, synchronisiert werden. Falls kein Code-Spreiz-Verfahren (z.B. CDMA-Verfahren) angewendet wird (z.B. wird ein TDMA-Verfahren verwendet), entspricht die Impulsdauer genau dem für die Sendung eines Bits benötigten Zeitintervall. Bei Anwendung eines Code-Spreiz-Verfahrens entspricht die Impulsdauer einem Chipintervall. Ein Bitintervall entspricht dabei mehreren Chipintervallen. Zur Rahmensynchronisation ist die Sendung einer speziellen Impulssequenz durch die Basisstation erforderlich. Der Startzeitpunkt der Impulssequenz entspricht dem Startzeitpunkt eines Rahmens.

Im folgenden sei vorausgesetzt, daß die Terminals bereits mit der Basisstation synchronisiert und dort registriert sind. Bevor ein Terminal (z.B. eines der Terminals 4 bis 7 in Fig. 1) Nutzdaten senden und empfangen kann, muß diesem zur Übertragung ein Nutzkanal für eine Downlink- und eine Uplink-Verbindung oder ein Peer-to-Peer-Nutzkanal von der zugehörigen Basisstation (z.B. Basisstation 1 in Fig. 1) zur Verfügung gestellt werden. Hierzu sendet die Basisstation (z.B. die Basisstation 1 in Fig. 1) an die zugeordneten Terminals (z.B. die Terminals 4 bis 7) über einen Downlink-Verteil-Steuerkanal (downlink broadcast control channel) während eines frei wählbaren Rahmens Steuerdaten. Diese Steuerdaten unterrichten die Terminals darüber, zu welchem Zeitpunkt (Sequenz-Startzeitpunkt) bezogen auf den Rahmen diese jeweils eine spezielle Signalisierungssequenz senden können. Eine solche von einem Terminal gesendete Signalisierungssequenz ist ein pseudo-zufälliges Rechtecksignal und gibt an, daß dieses Terminal einen Nutzkanal anfordert. Jedem Terminal wird daher zur Aussendung einer Signalisierungssequenz von der Basisstation ein Uplink-Signalisierungskanal zugewiesen, über den Signalisierungssequenzen übertragen werden. Um die Anzahl der Sendung von Steuerdaten zu begrenzen, kann die Basisstation die Zuordnung der Signalisierungssequenz und des Sequenz-Startzeitpunkts für jedes Terminal nur einmal durchführen. Dies kann beispielsweise während der Registrierung eines Terminals bei der zugehörigen Basisstation passieren. Die Zuweisung der Sequenz-Startzeitpunkte kann aber auch - wie weiter unten erläutert wird - in Abhängigkeit von den unterschiedlichen Kanaleigenschaften der Verbindungen zwischen Basisstation und Terminals erfolgen. Ein Signalisierungskanal ist bei der Erfindung durch die bestimmte Signalisierungssequenz und deren Startzeitpunkt realisiert.

Alle einer Basisstation zugeordneten Terminals senden die gleiche Signalisierungssequenz aber zu unterschiedlichen Zeitpunkten (Sequenz-Startzeitpunkten) aus. Folglich weisen unterschiedliche Basisstation ihren zugeordneten oder registrierten Terminals unterschiedliche Signalisierungssequenzen zu. Hierbei ist es allerdings ausreichend, wenn nur die benachbarten Basisstationen jeweils unterschiedliche Signalisierungssequenzen haben. Wenn ein Terminal beispielsweise bei einem Übergang von einer in eine andere Funkzelle bei zwei Basisstationen registriert ist, sendet dieses die Signalisierungssequenz aus, welche die Basisstation vorgibt, von der ein Nutzkanal angefordert wird.

Eine Basisstation enthält ein einziges Matched-Filter und einen nachgeordneten Impulsdetektor zur Detektion der von den Terminals ausgesendeten Signalisierungssequenzen. Das Matched-Filter wird mit einer Taktrate getaktet, die wenigstens gleich der maximalen Chiprate ist, wenn eine Codespreizung verwendet wird, oder gleich der maximalen Bitrate, wenn keine Codespreizung verwendet wird. Von den Terminals werden solche Signalisierungssequenzen ausgesendet, die eine gute Autokorrelationseigenschaft aufweisen. Das bedeutet, daß die sich am Ausgang des Matched-Filters aus aufeinanderfolgenden Signalisierungssequenzen verschiedener Terminals ergebenen Impulse innerhalb eines Detektionsfensters von dem Impulsdetektor eindeutig detektiert werden können. Die Wahl der Taktrate in Abhängigkeit von der maximalen Chiprate bzw. Bitrate und einer Signalisierungssequenz mit guten Autokorrelationseigenschaften ermöglicht, daß die aufeinanderfolgenden Signalisierungssequenzen einen minimalen zeitlichen Abstand zwischen Ihren Startzeitpunkten aufweisen. Weiterhin sollte die Signalisierungssequenz eine gute Kreuzkorrelationseigenschaft aufweisen, d.h. die Korrelation zu anderen im Netzwerk übertragenen Signalen sollte gering sein. Somit werden einerseits die anderen im Netzwerk übertragenen und vom Matched-Filter empfangenen Signale vom Impulsdetektor als ein vernachläßigbares Rauschsignal und andererseits werden die Signalisierungssequenzen von anderen Schaltungeselementen in der Basisstation, welche die anderen im Netzwerk übertragenen Signale verarbeiten, als vernachläßigbares Rausch- bzw. Störsignal interpretiert. Eine solche Signalisierungssequenz mit guten Auto- und Kreuzkorrelationseigenschaften ist beispielsweise die aus dem Buch "J.G. Proakis: Digital Communications von J.G. Proakis, Third Edition, McGraw-Hill International Editions, 1995, Seiten 724 bis 729" bekannte Sequenz von Gold und Kasami.

Die sich am Ausgang des Matched-Filters ergebenen Impulse sind ein Maß für die Energie der Signalisierungssequenzen. Die Länge und die im Gegensatz zu den anderen zu übertragenden Signale niedrige Amplitude der Signalisierungssequenz bestimmt demzufolge die Impulshöhe am Ausgang des Matched-Filters.

Der Sequenz-Startzeitpunkt einer Signalisierungssequenz sollte von der Basisstation so festgelegt werden, daß das Matched-Filter in der Basisstation einen Impuls nach der Detektion einer Signalisierungssequenz eines ihr zugeordneten Terminals in einem vorgegebenen Detektionsfenster erzeugt. Dieses Detektionsfenster weist die Dauer oder Länge $\delta$ auf.

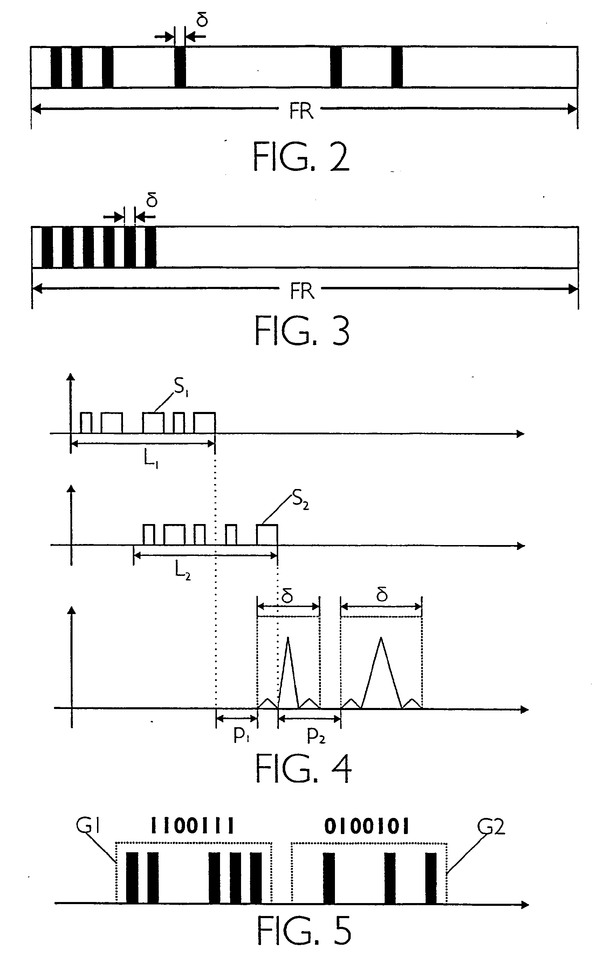

Prinzipiell lassen sich die Signalisierungssequenzen zu beliebigen Sequenz-Startzeitpunkten aussenden. Ein Sequenz-Startzeitpunkt ist mit dem Auftreten eines Impulses am Ausgang des Matched-Filters verbunden. Die Detektion beginnt nach Aussendung einer Signalisierungssequenz und einer durch die Kanaleigenschaft einer Verbindung zwischen wenigstens einem Terminal und einer Basisstation bedingten Verzögerung. Als Kanaleigenschaft werden die physikalischen Kenngrößen eines Kanals bezeichnet. Eine Kanaleigenschaft ergibt sich beispielsweise aus der Entfernung zwischen Terminal und Basisstation. Folglich ist es möglich, daß der Impulsdetektor unterschiedlich breite Detektionsfenster für die verschiedenen Terminals benutzt. Der Einfachheit halber wird hier eine einheitliche Breite des Detektionsfensters gewählt. Die Folge beliebig auftretender Detektionsfenster der Dauer $\delta$ ist in Bezug auf den Referenzrahmen der Länge FR in Fig. 2 gezeigt. Das Matched-Filter erzeugt aus einer empfangenen Signalisierungssequenz in der Regel eine Impulsfolge mit einem Hauptimpuls und mehreren häufig symmetrisch um den Hauptimpuls verteilten Nebenimpulsen. Die Amplitude der Nebenimpulse ist regelmäßig kleiner als die Amplitude des Hauptimpulses.

Die verschiedenen vom Matched-Filter erzeugten Hauptimpulse müssen einen ausreichenden Abstand (guard time) aufweisen, damit sich die am Ausgang des Matched-Filters erscheinenden, durch den Kanal verzerrte Impulsfolge der unterschiedlichen Terminals nicht so überlappen, daß keine eindeutige Detektion möglich wird. Bei einer bestimmten Überlappung kann die Basisstation die Impulse nicht eindeutig einem Terminal zuordnen. Die Breite oder Dauer $\delta$ des Detektionsfensters muß also mindestens gleich der Hauptimpulsbreite sein, die sich ohne Kanaleinfluß ergibt, und einem zusätzlichen kanalabhängigen Sicherheitsintervall sein. Daraus ergibt sich auch der Abstand von aufeinanderfolgenden, gleichen Signalisierungssequenzen. Es muß jedoch keine Rücksicht auf die zeitlichen Abstände von zwei unterschiedlichen Signalisierungssequenzen genommen werden, die von unterschiedlichen Basisstationen stammen, weil aufgrund geringer Korrelation ein dem Matched-Filter nachgeschalteter Impulsdetektor eine Signalisierungssequenz einer anderen Basisstation bzw. Funkzone als nicht störendes Rauschen detektiert.

Um möglichst viele Signalisierungssequenzen innerhalb eines vorgegebenen Zeitraumes auszusenden, kann erfindungsgemäß ein optimierter Abstand der Sequenz-Startzeitpunkte vorgesehen sein. Das bedeutet, daß jeweils die Breite des Detektionsfensters in Abhängigkeit von den Kanaleigenschaften zwischen einem Terminal und der Basisstation ermittelt wird. Eine andere erfindungsgemäße, einfacher zu realisierende Möglichkeit besteht darin, daß die Signalisierungssequenzen aufeinanderfolgend mit einem konstanten Abstand gesendet werden. Bei der Bestimmung des konstanten Abstandes sind die schlechtesten Kanaleigenschaften zu berücksichtigen. Fig. 3 zeigt die kontinuierlich aufeinanderfolgenden Detektionsfenster in Bezug auf den Referenzrahmen der Länge FR, die sich als Folge der mit einem vorgegebenen konstanten Abstand ausgesendeten Signalisierungssequenzen ergeben.

In Fig. 4 sind zwei beispielhafte Signalisierungssequenzen $S_1$ und $S_2$ gezeigt, welche die Sequenzdauer oder Sequenzlänge $L_1$ und $L_2$ aufweisen. Nach einer durch die Kanaleigenschaften bedingten Verzögerungszeit $p_1$ und $p_2$ startet jeweils der Detektionsvorgang bzw. das Detektionsfenster der Länge $\delta$. In einem solchen Detektionsfenster erscheint ein einer Signalisierungssequenz zugeordneter Hauptimpuls und Nebenimpulse.

Die Länge $\delta$ des Detektionsfensters wird insbesondere durch drei Faktoren (Kanaleigenschaften) bestimmt. Erstens muß die Genauigkeit der Abschätzung der Ausbreitungsverzögerung (propagation delay) der zu übertragenden Daten von den Terminals zu der Basisstation, zweitens die Impulsverbreiterung (delay spread characteristic) aufgrund von Mehrfachausbreitung (multi-path) und drittens die Autokorrelationseigenschaften der Signalisierungssequenzen der Terminals in Betracht gezogen werden.

In einer Funkzelle sind die Terminals in der Regel unterschiedlich weit entfernt von der Basisstation. Dies führt zu unterschiedlichen Ausbreitungsverzögerungen der von den Terminals ausgesendeten Signalisierungssequenzen. Es soll die Ausbreitungsverzögerung zwischen dem Terminal $MT_i$ und der Basisstation B gleich $p_i$ und die Länge der Signalisierungssequenz gleich L sein. Wenn die Basisstation einen Impuls für das Terminal $MT_i$ am Ausgang des Matched-Filters zum Zeitpunkt $t_i$ erwartet, weist es das Terminal $MT_i$ an, mit der Übertragung der Signalisierungssequenz zum Zeitpunkt $t_i - p_i - L$ zu beginnen. Jedoch wegen der begrenzten Genauigkeit der Abschätzung der Ausbreitungsverzögerung $p_i$ ist der Impuls am Ausgang des Matched-Filters mit einer Ungenauigkeit behaftet. Diese Ungenauigkeit in der Abschätzung der Ausbreitungsverzögerung $p_i$ muß durch ein genügend langes Detektionsfenster $\delta$ kompensiert werden. Beträgt die maximale Ungenauigkeit in der Abschätzung für alle Terminals j, muß das Detektionsfenster größer als j sein.

Die Daten zwischen einem Terminal und einer Basisstation werden in der Regel nicht nur über einen Funkweg sondern über mehrere übertragen (Mehrfachausbreitung). Aufgrund von Reflexions- und Beugungseffekten läuft das von einem Terminal zur Basisstation übertragene Signal über verschiedene Wege und die sich daraus ergebenden, über verschiedene Wege laufende Signale werden von der Basisstation zu unterschiedlichen Zeitpunkten empfangen. Dadurch ergibt sich am Ausgang des Matched-Filters für eine Signalisierungssequenz nicht nur ein einzelner Hauptimpuls, sondern es erscheinen am Ausgang des Matched-Filters weitere Hauptimpulse. Diese weiteren Hauptimpulse entstehen am Ausgang des Matched-Filters durch Signale, die durch die Mehrfachausbreitung entstanden sind und die um den eigentlichen Hauptimpuls gruppiert sind. Der eigentliche Hauptimpuls entsteht am Ausgang des Matched-Filters aus der empfangenen eigentlichen Signalisierungssequenz. Daher muß die Länge δ des Detektionsfensters größer als ein Fenster der Länge w gewählt sein, welches den eigentlichen Hauptimpuls und die weiteren Hauptimpulse enthält. Es sei bemerkt, daß auch ohne Mehrfachausbreitung am Ausgang des Matched-Filters nicht nur ein eigentlicher Hauptimpuls, sondern auch Nebenimpulse erscheinen. Die Amplitude der Nebenimpulse ist jedoch viel kleiner als die Amplitude des Hauptimpulses aufgrund der oben geschilderten guten Autokorrelationseigenschaften.

Die Autokorrelationseigenschaft der Signalisierungssequenz ist das Maß für die Breite des Hauptimpulses und der Minima und Maxima der Nebenimpulse am Ausgang des Matched-Filters (ohne Berücksichtigung der Kanaleigenschaften). Bei einer Gold- oder Kasami-Sequenz ist - wie oben erwähnt - der Hauptimpuls am Ausgang des Matched-Filters ungefähr gleich der Energie der Signalisierungssequenz. Die Amplitude des Hauptimpulses ist dabei sehr viel größer als die der Nebenimpulse. Die Energie der Signalisierungssequenz wird also bestimmt durch deren Amplitude und Dauer bzw. Länge. Um die Interferenz mit anderen Signalen zu reduzieren, sollte die Signalisierungssequenz (z.B. Gold- oder Kasami-Sequenz) eine gegenüber den anderen Signalen bedeutend geringere Amplitude aufweisen. Damit aber eine Detektion einer Signalisierungssequenz mit Hilfe des Matched-Filters möglich ist, muß die Signalisierungssequenz genügend lang sein. Hierdurch verlängert sich die Detektiondauer einer Signalisierungssequenz und damit die Zuweisung von Nutzkanälen der Basisstation zu dem Terminal (Verlängerung der Signalisierungszeit), welches eine Signalisierungssequenz gesendet hat. Also beeinflußt die Länge einer Signalisierungssequenz sowohl die Autokorrelationseigenschaft der Signalisierungssequenz als auch die Signalisierungszeit. Wenn für eine gegebene Signalisierungssequenz die Autokorrelationsfunktion innerhalb eines Zeitintervalls q hinreichend groß ist, muß δ größer als q sein.

Es ist also festzuhalten, daß die Länge oder Dauer δ des Detektionsfensters gleich der Summe der Werte von j, w und q gewählt werden muß:

$$\delta = j + w + q$$

Bisher ist der Fall beschrieben worden, daß die Dauer δ des Detektionsfenster so bemessen ist, daß nur eine einzige Signalisierungssequenz detektiert werden kann. Das bedeutet, das eine Basisstation eine binäre Information oder 1-Bit-Information erhält. Diese binäre Information gibt an, ob ein Terminal, welches die Signalisierungssequenz ausgesendet hat, einen neuen Nutzkanal (Impuls am Ausgang des Matched-Filters während der Dauer des Detektionsfensters vorhanden) oder keinen Nutzkanal anfordert (Impuls am Ausgang des Matched-Filters während der Dauer des Detektionsfensters nicht vorhanden). Im folgenden wird die Ausweitung der Übertragung von einer 1-Bit- zu einer n-Bit-Information (n>1, n ist ganze Zahl). Hierbei sendet ein Terminal die gleiche Signalisierungssequenz nicht einmal sondern mehrmals hintereinander pro Referenzrahmen aus, um der Basisstation eine n-Bit-Information zur Verfügung zu stellen. Diese Erweiterung von einer 1-Bit- zu einer n-Bit-Information wird durch eine Verlängerung des Detektionsfensters erreicht, indem die Dauer oder Länge des Detektionsfensters für jedes betroffene Terminal um den Faktor n vergrößert wird. Damit können während des Auftretens des n-fach vergrößerten Detektionsfensters n Signalisierungssequenzen eines Terminals detektiert werden. Das Terminal, welches eine n-Bit-Infomation (Signalisierungsdaten) überträgt, verwendet gleiche Signalisierungssequenzen, deren Startzeitpunkte um den Wert δ jeweils verschoben sind. Eine ausgesendete Signalisierungssequenz gibt dann beispielsweise eine "1" und eine nicht ausgesendete Signalisierungssequenz eine "0" an.

In Fig. 5 ist ein Beispiel für die Position von aus gleichen Signalisierungssequenzen detektierten Impulse dargestellt. Eine erste Gruppe G1 von Impulsen ist Signalisierungssequenzen eines ersten Terminals und eine zweite Gruppe G2 von Impulsen ist Signalisierungssequenzen eines zweiten Terminals zugeordnet. Aus der ersten Gruppe G1 ergibt sich die 7-Bit-Information "1100111" und aus der zweiten Gruppe G2 die Information "0100101".

Mit der Übertragung von n-Bit-Informationen eines Terminals sind verschiedene Signalisierungsanwendungen denkbar. Beispielsweise kann die Information "000", was einer Nichtaussendung von drei aufeinanderfolgenden Signalisierungssequenzen entspricht, bedeuten, daß das Terminal keinen Nutzkanal anfordert. Die Information "001" kann bedeuten, daß das Terminal einen 8-kBit/s-Nutzkanal anfordert. Durch zwei nicht ausgesendete und eine ausgesendete Signalisierungssequenz wird die Information "001" erzeugt. Der Wunsch nach einen 64-kBit/s-Nutzkanal eines Terminals kann durch die Information "010" und der Wunsch nach einem 144-kBit/s-Nutzkanal eines Terminals kann durch die Information "011" ausgedrückt werden.

Das Matched-Filter in der Basisstation ist hierbei für den Empfang sowohl von 1-Bit- als auch von n-Bit-Informationen vorgesehen, da in beiden Fällen die gleiche Signalisierungssequenz empfangen wird. Es unterscheidet sich in den beiden Fällen nur die Nachverarbeitung der vom Matched-Filter detektierten Impulse. Eine Informationsverarbeitung wird im ersten Fall nach der Dauer δ für die Detektion einer Signalisierungssequenz und im zweiten Fall nach der Dauer nδ für die Detektion von n Signalisierungssequenzen durchgeführt.

Ein weiterer Punkt der Erfindung betrifft die Erhöhung der Signalisierungskanäle. Die Anzahl der Signalisierungskanäle einer Basisstation bei Verwendung einer einzigen Signalisierungssequenz ist auf den Wert FR/δ begrenzt, wobei FR die Länge des Referenzrahmens und δ die Länge eines Detektionsfensters ist. Hierbei ist angenommen, daß nur 1-Bit-Informationen übertragen werden, jedes Detektionsfenster gleich lang ist und die Länge δ aufweist. Falls eine Basisstation mehr Signalisierungskanäle zuweisen möchte, als durch den Wert FR/δ gegeben sind, kann diese den Terminals nicht nur eine einzige sondern unterschiedliche Signalisierungssequenzen zuweisen. Beispielsweise können während eines Referenzrahmens 100 gleiche Signalisierungssequenzen vom Matched-Filter detektiert werden. Sind aber z.B. 120 Terminals in der Funkzelle, die eine Signalisierungssequenz senden wollen, so ist es nicht möglich, daß alle diese 120 Terminals die gleiche Signalisierungssequenz verwenden. Daher können z.B. 60 Terminals eine erste und die anderen 60 Terminals eine zweite Signalisierungssequenz aussenden, die dann von zwei unterschiedlichen Matched-Filtern in der Basisstation detektiert werden können. Es sei noch erwähnt, daß die Sequenz-Startzeitpunkte der unterschiedlichen Signalisierungssequenzen unabhängig voneinander sind, also eine Koordinierung aufeinander nicht erforderlich ist. Nur die Startzeitpunkte der gleichen Signalisierungssequenzen müssen aufeinander abgestimmt werden.

Bei der Übertragung einer Signalisierungssequenz zu einer Basisstation muß noch darauf geachtet werden, daß die Amplitude der Signalisierungssequenz (vgl. Fig. 4) weder zu hoch noch zu niedrig ist, da bei bestimmten Verfahren (z.B. CDMA-Verfahren) die Amplitude der gesendeten Signalisierungssequenz an den Abstand zur zugeordneten Basisstation angepaßt werden sollten. Eine zu hohe Amplitude beispielsweise in einem CDMA-System bedeutet, daß eine Interferenz mit anderen Signalen entstehen kann. Hierdurch reduziert sich die Kapazität des gesamten Systems. Eine zu kleine Amplitude bedeutet, daß eine Signalisierungssequenz nicht korrekt empfangen werden kann, weil sie in der Basisstation durch die Interferenz durch andere Signale und/oder Rauschsignale nicht korrekt detektiert werden kann.

Um dieses Problem zu lösen, kann ein Terminal eine Signalisierungssequenz mit einer kleinen Amplitude aussenden, die unter normalen Umständen genügend gut von einer Basisstation zu empfangen ist. Wenn diese Signalisierungssequenz von der zugeordneten Basisstation detektiert worden ist, teilt die Basisstation dem Terminal einen angeforderten Kanal zu. Nach Empfang der Meldung, sendet das Terminal keine weitere Signalisierungssequenz mehr aus.

Wenn das Terminal nach Aussendung einer Signalisierungssequenz nach einer vorgegebenen Zeit keine Rückmeldung von der zugeordneten Basisstation erhält, sendet es eine neue Signalisierungssequenz mit einer höheren Amplitude aus. Wenn das Terminal nicht innerhalb der vorgegebenen Zeit eine Zuweisung von der Basisstation erhält, wird ein weitere Signalisierungssequenz mit einer wiederum erhöhten Amplitude ausgesendet. Dieser Prozeß wird solange wiederholt, bis ein vorgegebener, maximaler Wert für die Amplitude erreicht worden ist oder das Terminal zuvor eine Kanalzuweisung von der Basisstation erhalten hat.

In dem Fall, daß ein Terminal keine Rückmeldung für eine Signalisierungssequenz mit der maximal erlaubten Amplitude nach der vorgegebenen Zeit erhalten hat, wird dieser gesamte Prozeß nach einer bestimmten Zufallszeit wiederholt oder es wird auf eine Signalisierung verzichtet.

Wenn die Amplitude der Signalisierungssequenz so klein wie möglich ist, kann unter Umständen eine weiteres Problem auftauchen. Dieses Problem betrifft die Erhöhung der Fehler-Alarm-Rate (False Alarm Rate = FAR). Eine Fehler-Alarm-Rate ist gleich der Wahrscheinlichkeit, daß der dem Matched-Filter nachgeschaltete Impulsdetektor einen Impuls detektiert, obwohl keine Signalisierungssequenz gesendet worden ist.

Dieses Problem mit der Erhöhung der Fehler-Alarm-Rate kann dadurch gelöst werden, daß die Basisstation nach Detektion einer Signalisierungssequenz einem Terminal nicht sofort einen Kanal zuweist, sondern, daß die Basisstation mit der Zuweisung wartet, bis mehrere Signalisierungssequenzen (h Signalisierungssequenzen mit h > 1) in g (g > 1) aufeinanderfolgenden Rahmen in dem vorgesehenen Detektionsfenster detektiert worden sind. Wenn die Fehler-Alarm-Rate für einen detektierten Impuls in der Basisstation gleich p ist, dann ist die Fehler-Alarm-Rate für h aufeinanderfolgende detektierte Impulse auf $p^h$ reduziert.

Die Erfindung kann in jedem existierenden oder noch einzuführenden Mobilfunksystem, wie z.B. GSM- oder auf WB-CDMA bzw. CD/TDMA basierenden UMTS-Mobilfunksystem (UMTS = Universal Mobile Telecommunication System) als zusätzliche Schaltungsteile eingefügt werden. In den Fig. 6 bis 9 ist ein Empfänger (Fig. 6) und ein Sender (Fig. 7) einer Basisstation und ein Empfänger (Fig. 8) und ein Sender (Fig. 9) eines Terminals dargestellt.

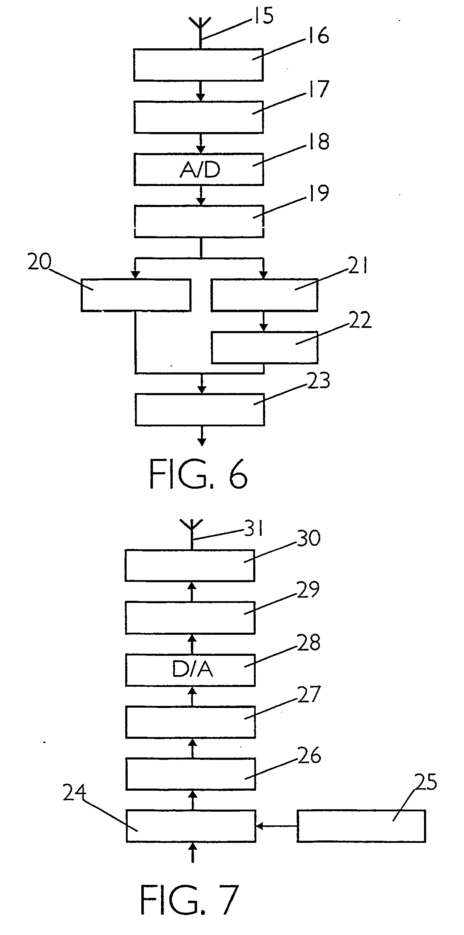

Das in Fig. 6 gezeigte Blockschaltbild eines Empfängers einer Basisstation enthält als bekannte Elemente (z.B. aus dem GSM-Mobilfunksystem oder einem CDMA-System) eine Antenne 15, einen Hochfrequenzblock 16, einen Zwischenfrequenzblock 17, einen Analog-Digital-Umsetzer 18 einen Demodulator 19 und einen Block 20, der z.B. die Schaltfunktionen Kanaldemultiplex, Deinterleaving, Kanaldecodierung und bei Verwendung eines CDMA-Systems auch eine Entspreizung (despreading) ausführt. Die im Basisband vorliegenden Steuer- und Nutzsignale werden einem Kanalzugriffssteuerblock 23 zugeführt, der die verschiedenen Signale an die entsprechenden Einheiten zur Weiterverarbeitung, wie z.B. einer Vermittlungsstelle weiterleitet. Erfindungsgemäß ist in den Empfänger der Basisstation ein Matched-Filter 21 eingefügt, welches die empfangenen Signale daraufhin überprüft, ob eine Signalisierungssequenz vorliegt. Ist eine Signalisierungssequenz während des erwarteten Zeitraumes (Detektionsfenster) detektiert worden, d.h. es wird wenigstens ein Impuls erzeugt, wird dies von einem nachfolgenden Impulsdetektor 22 festgestellt und dem Kanalzugriffssteuerblock 23 gemeldet, der z.B. ein Prozessor sein kann. Der Kanalzugriffssteuerblock 23 leitet diese Meldung an nachgeordnete hier nicht dargestellte weitere Steuerungselemente weiter, die dann z.B. mittels generierter Steuerdaten über den Sender der Basisstation dem Terminal einen Nutzkanal zuweisen.

Die Dauer oder Länge δ des Detektionsfensters kann fest vorgegeben sein und beispielsweise durch Messungen vor dem normalen Betrieb des Netzwerks festgelegt worden sein. Es ist auch möglich die Dauer δ des Detektionsfensters für jedes Terminal individuell während des Betriebs zu bestimmen. Die Dauer δ des Detektionsfensters für eine bestimmte Signalisierungssequenz und eines Terminals wird in diesem Fall von einem hier nicht näher dargestellten Steuerungselement dem Impulsdetektor nach der Auswertung von Meßergebnissen zugeführt. Beim GSM-Mobilfunksystem wird beispielsweise die Entfernung zwischen einer Basisstation und einem Terminal anhand der vom Terminal empfangenen Signale in der Basisstation ausgewertet.

Die Informationsverarbeitung der vom Impulsdetektor 22 ermittelten vom Matched-Filter 21 erzeugten Impulse wird in dem Kanalzugriffssteuerblock 23 durchgeführt. Ein bestimmte Detektionafenster ist einem Terminal zugeordnet. Wird in einem solchen Detektionsfenster wenigstens ein Hauptimpuls detektiert, stellt der Kanalzugriffssteuerblock 23 tionsfenster wenigstens ein Hauptimpuls detektiert, stellt der Kanalzugriffssteuerblock 23 fest, daß eine Anfrage des Terminals nach einem Nutzkanal vorliegt. Aus dieser Anfrage und Anfragen weiterer Terminals und unter Betrachtung der bestehenden Verbindungen bzw. der vergebenden Nutzkanäle, entscheidet ein nicht näher dargestelltes Steuerelement nach Empfang der Anfrage vom Kanalzugriffssteuerblock 23, ob dem anfragenden Terminal ein Nutzkanal zur Verfügung gestellt werden kann. Falls eine Zuweisung eines Nutzkanals möglich ist, wird dieser Nutzkanal bestimmt und nach Verarbeitung im Sender der Basisstation (Fig. 7) über einen Downlink-Verteil-Steuerkanal dem Terminal zugeführt.

Der in Fig. 7 dargestellte Sender der Basisstation enthält ebenfalls einen Kanalzugriffssteuerblock 24, der Daten von verschiedenen Quellen 25 erhält. Eine solche Quelle kann beispielsweise eine Vermittlungsstelle sein, die Nutzdaten liefert, oder ein Steuerungselement, welches Steuerdaten zuführt. Beispielsweise können diese Steuerdaten Informationen über einen zu verwendenden Nutzkanal für ein Terminal enthalten, welches mittels einer Signalisierungssequenz zuvor einen Nutzkanal angefordert hat. Der dem Steuerblock 24 nachfolgende Block 26, der z.B. die Schaltfunktionen Kanalcodierung, Interleaving, Kanalmultiplex und bei Verwendung eines CDMA-Systems auch eine Spreizung (spreading) durchführt. Das Ausgangssignal des Blocks 26 wird über einen Modulator 27, einem Digital-Analog-Umsetzer 28, einem Zwischenfrequenzblock 29 und einem Hochfrequenzblock 30 zu einer Antenne 31 gegeben. Alle Elemente 25 bis 31 können aus existierenden Mobilfunksystemen bekannte Elemente sein.

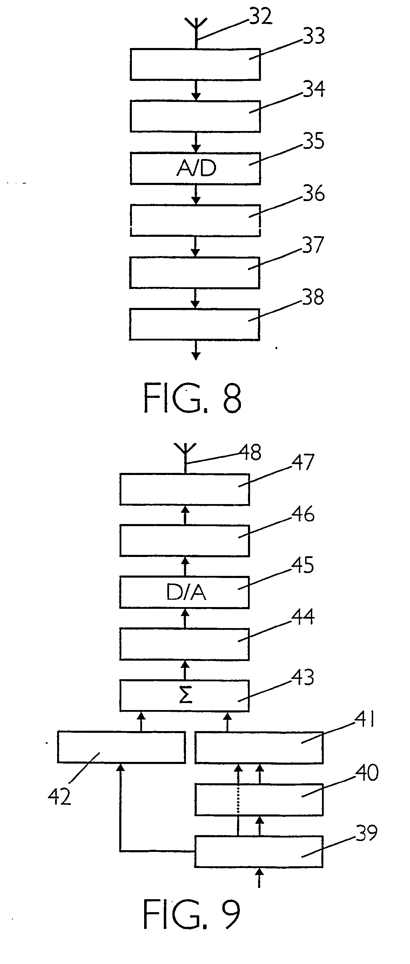

Ein Blockschaltbild eines Empfängers eines Terminals zeigt Fig. 8. Dieser Empfänger enthält als beispielsweise aus dem GSM-Mobilfunksystem oder einem CDMA-System bekannte Elemente eine Antenne 32, einen Hochfrequenzblock 33, einen Zwischenfrequenzblock 34, einen Analog-Digital-Umsetzer 35, einen Demodulator 36, einen Block 37 mit verschiedenen Funktionen und einen Kanalzugriffssteuerblock 38, der Steuer- und Nutzdaten an verschiedene Senken (z.B. Niederfrequenzschaltung zur Umsetzung von Nutzdaten in Sprachdaten). Der Block 37 ist beispielsweise für die Schaltfunktionen Kanaldemultiplex, Deinterleaving, Kanaldecodierung und bei Verwendung eines CDMA-Systems für die Entspreizung zuständig. Der Kanalzugriffssteuerblock 38 wertet bestimmte für das Terminal relevante Kanäle, wie z.B. einen Nutzkanal oder einen Downlink-Verteil-Steuerkanal aus. Diese Informationen werden an bestimmte andere hier nicht dargestellte Schaltungselement im Terminal geleitet. Aus dem Downlink-Verteil-Steuerkanal entnimmt der Kanalzugriffsblock 38 beispielsweise die Information, zu welchem Startzeitpunkt, wenigstens eine Signalisierungssequenz ausgesendet werden kann. Diese Information wird an wenigstens ein hier nicht näher dargestelltes Schaltungselement geleitet.

Das Terminal enthält in seinem Sender, dessen zugehöriges Blockschaltbild in Fig. 9 dargestellt ist, ebenfalls ein Kanalzugriffssteuerblock 39, der einen Kanalzugriff steuert. Der Kanalzugriffssteuerblock 39 liefert einem Block 42, der z.B. die Schaltfunktionen Kanalcodierung, Interleaving, Kanalmultiplex und bei Verwendung eines CDMA-Systems auch eine Spreizung durchführt. Ferner gibt der Kanalzugriffssteuerblock 39 einem Zeitsteuerelement 40 den Startzeitpunkt einer Signalisierungssequenz an. Die Nutz- und Steuerdaten erhält der Kanalzugriffssteuerblock 39 von verschiedenen Quellen. Eine solche Quelle kann beispielsweise eine Niederfrequenzschaltung sein, die Sprachdaten als Nutzdaten liefert, oder ein Steuerungselement, welches Steuerdaten zuführt. Beispielsweise können diese Steuerdaten Informationen über den Startzeitpunkt einer Signalisierungssequenz sein. Das Zeitsteuerelement 40 liefert Zeitmarken an einen Generator 41 zur Erzeugung einer Signalisierungssequenz. Die Zeitmarken können beispielsweise die Start- und Endzeitpunkte von rechteckförmigen Impulsen der Signalisierungssequenz sein. Der Generator enthält einen Speicher zur Speicherung verschiedener Signalisierungssequenzen. Die auszusendende Signalisierungssequenz wird von dem Kanalzugriffssteuerblock ausgewählt. In den Speicher des Generators 41 können gegebenenfalls Signalisierungssequenzen eingeschrieben werden. Der Generator 41 und das Zeitsteuerelement 40 werden nach Empfang der Information über die zu verwendende Signalisierungssequenz und des Startzeitpunktes der Signalisierungssequenz initialisiert. Wenn keine Änderung der Signalisierungssequenz und/oder des Startzeitpunktes von der zugeordneten Basisstation angezeigt wird, ist eine weitere Initialisierung von Generator 41 und Zeitsteuerelement 40 nicht erforderlich.

Die im Block 42 bearbeiteten Nutz- und Steuerdaten werden einer Überlagerungschaltung 43 geliefert, die noch die Ausgangssignale des Generators 41 erhält. Das von der Überlagerungsschaltung 43 abgegebene Ausgangssignal wird über einen Modulator 44, einem Digital-Analog-Umsetzer 45, einem Zwischenfrequenzblock 46 zu einem Hochfrequenzblock 47 übertragen, der mittels einer Antenne 48 die im Hochfrequenzblock gebildeten Signale abstrahlt.

**Patentansprüche**

1. Drahtloses Netzwerk mit mindestens einer Basisstation (1 bis 3) und mehreren zugeordneten Terminals (4 bis 14) zum Austausch von Nutz- und Steuerdaten, wobei die Basisstation (1-3) eine Vorrichtung (21, 22) zur Korrelation einer von einem Terminal (4-14) gesendeten Signalisierungssequenz und zur Detektion des aus einer empfangenen und korrelierten Signalisierungssequenz entstandenen Impulses aufweist,

   **dadurch gekennzeichnet,**

   **dass** die Basisstation (1 bis 3) eingerichtet ist, um nach der Registrierung und Synchronisierung von Terminals die für die Signalisierung zu verwendende Signalisierungssequenz oder Signalisierungssequenzen und deren Startzeitpunkten über einen Steuerkanal an die zugeordneten Terminals zu senden, wobei die Signalisierungssequenz oder Signalisierungssequenzen nur der genannten aussendenden Basisstation (1 bis 3) und nicht deren benachbarten Basisstationen zugeordnet sind und den Terminals verschiedene Startzeitpunkte innerhalb eines Referenzrahmens zur Aussendung der Signalisierungssequenz zugeordnet sind, wobei die von der Basisstation (1 bis 3) übermittelten Startzeitpunkte der gleichen Signalisierungssequenzen jeweils einen Abstand zueinander aufweisen, der von der jeweils zwischen dem betreffenden Terminal (4 bis 14) und der Basisstation (1 bis 3) ermittelten Kanaleigenschaft abhängig ist.

2. Drahtloses Netzwerk nach Anspruch 1, **dadurch gekennzeichnet, dass** die Basisstation (1 bis 3) ein Matched-Filter (21) zur Erzeugung wenigstens eines Impulses nach Empfang einer Signalisierungssequenz und einen Impulsdetektor (22) enthält und

   dass der Impulsdetektor (22) angeordnet ist, während eines bestimmten Detektionsfensters, dessen Startzeitpunkt und Dauer durch die Kanaleigenschaften und den Startzeitpunkt einer Signalisierungssequenz bestimmt ist, wenigstens eines einem Terminal (4 bis 14) zugeordneten Impulses zu detektieren.

3. Drahtloses Netzwerk nach Anspruch 1, **dadurch gekennzeichnet, dass** ein Terminal (4 bis 14) eingerichtet ist, bei einem Signalisierungswunsch zu einem von der zugeordneten Basisstation (1 bis 3) vorgegebenen Zeitpunkt eine Kasami- oder Gold-Sequenz als Signalisierungssequenz auszusenden.

4. Drahtloses Netzwerk nach Anspruch 1, **dadurch gekennzeichnet, dass** die von der Basisstation (1 bis 3) an die zugeordneten Terminals (4 bis 14) übermittelten Startzeitpunkte der gleichen Signalisierungssequenzen jeweils den gleichen minimalen Abstand zueinander aufweisen.

5. Drahtloses Netzwerk nach Anspruch 1, **dadurch gekennzeichnet, dass** die Basisstation (1 bis 3) eingerichtet ist, um die zu verwendende Signalisierungssequenz und deren Startzeitpunkt über einen Steuerkanal an ein Terminal (4 bis 14) zu senden, um eine 1-Bit-Signalisierungsinformation zu übertragen.

6. Drahtloses Netzwerk nach Anspruch 1, **dadurch gekennzeichnet, dass** die Basisstation (1 bis 3) eingerichtet ist, um die verwendende Signalisierungssequenz und deren n Startzeitpunkte über einen Steuerkanal an ein Terminal (4 bis 14) zu senden, wobei n > 1 und eine ganze Zahl ist, um eine n-Bit-Signalisierungsinformation zu übertragen.

7. Drahtloses Netzwerk nach Anspruch 1, **dadurch gekennzeichnet, dass** eine Basisstation (1 bis 3) eingerichtet ist, um mehreren unterschiedliche zu verwendende Signalisierungssequenzen an mehrere unterschiedliche Gruppen von Terminals (4 bis 14) zu senden.

8. Drahtloses Netzwerk nach Anspruch 1, **dadurch gekennzeichnet, dass** eine Basisstation (1 bis 3) enthält: einen ersten Kanalzugriffssteuerblock (23) zur Entnahme von in den Kanälen enthalten Daten,

   zur Weiterleitung der entnommenen Daten an verschiedene weitere Schaltungselemente und zur Feststellung, ob eine Signalisierungswunsch von einem Terminal (4 bis 14) vorliegt; und

einen zweiten Kanalzugriffssteuerblock (24) zur Einfügung von Daten von verschiedenen Schaltungselementen in vorgegebene Kanäle.

9. Drahtloses Netzwerk nach Anspruch 1, **dadurch gekennzeichnet, dass** ein Terminal (4 bis 14) enthält:

- einen ersten Kanalzugriffssteuerblock (38) zur Entnahme von in vorgegebenen Kanälen enthalten Daten und zur Weiterleitung der entnommenen Daten an verschiedene weitere Schaltungselemente; und
- einen zweiten Kanalzugriffssteuerblock (39) zur Einfügung von Daten von verschiedenen Schaltungselementen in vorgegebene Kanäle und zur Aussendung wenigstens einer Signalisierungssequenz in Abhängigkeit von einem Zeitsteuerelement.

10. Drahtloses Netzwerk nach Anspruch 9, **dadurch gekennzeichnet, dass** ein Terminal (4 bis 14) einen Generator (41) mit einem wiederbeschreibbaren Speicher zur Speicherung von Signalisierungssequenzen enthält, wobei der zweite Kanalzugriffssteuerblock (39) zur Auswahl einer Signalisierungssequenz angeordnet ist.

11. Drahtloses Netzwerk nach Anspruch 1, **dadurch gekennzeichnet, dass** ein Terminal (4 bis 14) zur Aussendung einer Signalisiemgssequenz mit einer erhöhten Amplitude angeordnet ist, wenn nach einer vorgegebenen Zeit einer zuvor gesendeten Signalisierungssequenz keine Rückmeldung von der zugeordneten Basisstation (1 bis 3) erfolgt ist.

12. Drahtloses Netzwerk nach Anspruch 13, **dadurch gekennzeichnet, dass** ein Terminal (4 bis 14) eine Signalisierungssequenz mit einer erhöhten Amplitude schrittweise solange weiter erhöht und aussendet, bis innerhalb einer vorgegebenen Zeit eine Rückmeldung von der zugeordneten Basisstation (1 bis 3) erfolgt ist oder die Signalisierungssequenz eine maximale Amplitude aufweist.

13. Drahtloses Netzwerk nach Anspruch 12, **dadurch gekennzeichnet, dass** ein Terminal (4 bis 14) eine Signalisierungssequenz mehrfach aussendet und dass eine Basisstation (1 bis 3) eingerichtet ist, um eine Rückmeldung an das Terminal (4 bis 14) auszusenden, wenn diese die Signalisierungssequenz über mehrere Rahmen in dem dem Terminal (4 bis 14) zugewiesenen Detektionsfenster empfangen hat.

14. Basisstation in einem drahtlosen Netzwerk zum Austausch von Nun- und Steuerdaten mir mehreren zugeordneten Terminals (4 bis 14), wobei die Basisstation (1-3) eine Vorrichtung (21, 22) zur Korrelation einer von einem Terminal (4-14) gesendeten Signalisierungssequenz und zur Detektion des aus einer empfangenen und korrelierten Signalisierungssequenz entstandenen Impulses aufweist, **dadurch gekennzeichnet,**

**dass** die Basisstation (1 bis 3) eingerichtet ist, um nach der Registrierung und Synchronisierung von Terminals die für die Signalisierung zu verwendende Signalisierungssequenz oder Signalisierungssequenzen und deren Startzeitpunkte über einen Steuerkanal an die zugeordneten Terminals zu senden, wobei die Signalisierungssequenz oder Signalisierungssequenzen nur der genannten aussendenden Basisstation (1 bis 3) und nicht deren benachbarten Basisstationen zugeordnet sind und den Terminals verschiedene Startzeitpunkte innerhalb eines Referenzrahmens zur Aussendung der Signalisierungssequenz zugeordnet sind, wobei die von der Basisstation (1 bis 3) übermittelten Startzeitpunkte der gleichen Signalisierungssequenzen jeweils einen Abstand zueinander aufweisen, der von der jeweils zwischen dem betreffenden Terminal (4 bis 14) und der Basisstation (1 bis 3) ermittelten Kanaleigenschaft abhängig ist.

15. Verfahren zum Austausch von Nutz- und Steuerdaten in einem drahtlosen Netzwerk zwischen mindestens einer Basisstation (1 bis 3) und mehreren zugeordneten Terminals (4 bis 14), **gekennzeichnet durch** die Schritte:

- nach der Registrierung und Synchronisation von Terminals (1-4) Aussenden einer für die Signalisierung zu verwendenden Signalisierungssequenzoder Signalisierungssequenzen und deren Startzeitpunkte über einen Steuerkanal von der Basisstation (1-3) an die der Basisstation zugeordneten Terminals; wobei die Signalisierungssequenz oder Signalisierungssequenzen nur der genannten aussendenden Basisstation (1 bis 3) und nicht deren benachbarten Basisstationen zugeordnet sind und den Terminals verschiedene Startzeitpunkte innerhalb eines Referenzrahmens zur Aussendung der Signalisierungssequenz zugeordnet sind, wobei die von der Basisstation (1 bis 3) übermittelten Startzeitpunkten der gleichen Signalisierungssequenzen jeweils einen Abstand zueinander aufweisen, der von der jeweils zwischen dem betreffenden Terminal (4 bis 14) und der Basisstation (1 bis 3) ermittelten Kanaleigenschaft abhängig ist;
- Aussenden der Signalisierungssequenz von einem Terminal unter Verwendung des zugeordneten Startzeitpunkts bei Anforderung eines Übertragungskanals;

- Empfangen und Korrelieren einer Signalisierungssequenz in der Basisstation (1-3); und
- Detektieren eines aus der empfangenen und korrelierten Signalisierungssequenz entstandenen Impulses in der Basisstation (1-3);
- Zuweisen eines Übertragungskanals zu dem signalisierenden Tenninal.

**Claims**

1. A wireless network which includes at least one base station (1 to 3) and a plurality of associated terminals (4 to 14) for the exchange of useful data and control data, in which the base station (1-3) comprises a device (21, 22) for the correlation of a signaling sequence sent by a terminal (4 - 14) and for the detection of the pulse developed from a received and correlated signaling sequence, **characterized in that** the base station (1 to 3) is arranged to transmit, after the registration and synchronization of terminals, the signaling sequence or signaling sequences to be used for the signaling and their starting instants over a control channel to the assigned terminals, the signaling sequence or signaling sequences being assigned only to the said transmitting base station (1 to 3) and not their neighboring base stations and different starting instants within a reference window being assigned to the terminals for the transmission of the signaling sequence, the starting instants of the same signaling sequences sent by the base station (1 to 3) each having a mutual distance which is dependent on the channel property established between the relevant terminal (4 to 14) and the base station (1 to 3).

2. A wireless network as claimed in claim 1, **characterized in that** the base station (1 to 3) includes a matched filter (21) for generating at least one pulse after the reception of a signaling sequence, and a peak detector (22), and **in that** the peak detector (22) is arranged to detect at least one pulse associated with a terminal (4 to 14) during a given detection window whose starting instant and duration are determined by the channel properties and the starting instant of a signaling sequence.

3. A wireless network as claimed in claim 1, **characterized in that**, in case of a request for signalization, a terminal (4 to 14) is arranged to transmit a Kasami or Gold sequence as the signaling sequence at an instant defined by the associated base station (1 to 3).

4. A wireless network as claimed in claim 1, **characterized in that** the starting instants transmitted by the base station (1 to 3) to the assigned terminals (4 to 14), which starting instants belong to the same signaling sequences, each have the same mutual distance.

5. A wireless network as claimed in claim 1, **characterized in that** for the transmission of 1-bit signaling information the base station (1 to 3) is arranged to transmit the signaling sequence to be used and the starting instant thereof via a control channel to a terminal (4 to 14).

6. A wireless network as claimed in claim 1, **characterized in that** for the transmission of 1-bit signaling information the base station (1 to 3) is arranged to transmit the signaling sequence used and its n starting instants to a terminal (4 to 14) over a control channel, where n > 1 and is an integer.

7. A wireless network as claimed in claim 1, **characterized in that** a base station (1 to 3) is arranged to transmit a plurality of different signaling sequences to be used to a plurality of different groups of terminals (4 to 14).

8. A wireless network as claimed in claim 1, **characterized in that** a base station (1 to 3) includes a first channel access control block (23) which is arranged to extract data contained in the channels, to conduct the extracted data to various further circuit elements, and to determine whether there is the presence of a signaling request from a terminal (4 to 14), and also includes a second channel access control block (24) which is arranged to insert data from various circuit elements into predetermined channels.

9. A wireless network as claimed in claim 1, **characterized in that** a terminal (4 to 14) includes

- a first channel access control block (38) which serves to extract data contained in predetermined channels and to conduct the extracted data to various further circuit elements, and
- a second channel access control block (39), which is arranged to insert data from various circuit elements into predetermined channels and to transmit at least one signaling sequence in dependence on a timer element.

10. A wireless network as claimed in claim 9, **characterized in that** a terminal (4 to 14) includes a generator (41) with a write memory for storing signaling sequences, and that the second channel access control block (39) is arranged to select a signaling sequence.

11. A wireless network as claimed in claim 1, **characterized in that** a terminal (4 to 14) is provided for transmitting a signaling sequence with increased amplitude if after a predefined period of time no acknowledgement from the assigned base station (1 to 3) has occurred of a previously transmitted signaling sequence.

**12.** A wireless network as claimed in claim 13, **characterized in that** a terminal (4 to 14) increases a signaling sequence having increased amplitude in a step-by-step fashion and transmits same until an acknowledgement from the assigned base station (1 to 3) has occurred within a predefined period of time, or the signaling sequence has maximum amplitude.

**13.** A wireless network as claimed in claim 12, **characterized in that** a terminal (4 to 14) transmits a signaling sequence several times and **in that** a base station (1 to 3) is provided for transmitting an acknowledgement to the terminal (4 to 14) when this base station has received the signaling sequence over various frames in the detection window assigned to the terminal (4 to 14).

**14.** A base station in a wireless network for the exchange of useful data and control data with a plurality of assigned terminals (4 to 14), in which the base station (1 - 3) comprises a device (21, 22) for the correlation of a signaling sequence sent by a terminal (4 - 14) and for the detection of the pulse developed from a received and correlated signaling sequence, **characterized in that** the base station (1 to 3) is arranged to transmit, after the registration and synchronization of terminals, the signaling sequence or signaling sequences to be used for the signaling and their starting instants over a control channel to the assigned terminals, the signaling sequence or signaling sequences being assigned only to the said transmitting base station (1 to 3) and not their neighboring base stations and different starting instants within a reference window being assigned to the terminals for the transmission of the signaling sequence, the starting instants of the same signaling sequences sent by the base station (1 to 3) each having a mutual distance which is dependent on the channel property established between the relevant terminal (4 to 14) and the base station (1 to 3).

**15.** A method of exchanging useful data and control data between at least a base station (1 to 3) and a plurality of associated terminals (4 to 14) in a wireless network, **characterized by** the following steps of:

- transmitting, after the registration and synchronization of terminals (1 - 4), a signaling sequence to be used for the signaling or signaling sequences and their starting instants via a control channel from the base station (1 to 3) to the terminals assigned to the base station; the signaling sequence or signaling sequences being assigned only to the said transmitting base station (1 to 3) and not their neighboring base stations and different starting instants within a reference window being assigned to the terminals for the transmission of the signaling sequence, the starting instants of the same signaling sequences sent by the base station (1 to 3) each having a mutual distance which is dependent on the channel property established between the relevant terminal (4 to 14) and the base station (1 to 3);
- transmitting the signaling sequence by a terminal utilizing the assigned starting instant when a transmission channel is requested;
- receiving and correlating a signaling sequence in the base station (1 - 3); and
- detecting a pulse developed from the received and correlated signaling sequence in the base station (1 - 3);
- assigning a transmission channel to the signaling terminal.

## Revendications

**1.** Réseau sans fil avec au moins une station de base (1 à 3) et plusieurs terminaux attribués (4 à 14) pour l'échange de données utiles et de données de commande, la station de base (1-3) présentant un dispositif (21, 22) pour la corrélation d'une séquence de signalisation transmise par un terminal (4-14) et pour la détection de l'impulsion formée à partir d'une séquence de signalisation reçue et corrélée, **caractérisé en ce que** la station de base (1 à 3) est agencée pour transmettre après l'enregistrement et la synchronisation de terminaux la séquence de signalisation ou les séquences de signalisation à utiliser pour la signalisation et leurs moments de début par l'intermédiaire d'un canal de commande aux terminaux attribués, la séquence de signalisation ou les séquences de signalisation étant attribuées uniquement à ladite station de base émettrice (1 à 3) et non à ses stations de base voisines et différents moments de début dans un cadre de référence pour la transmission de la séquence de signalisation étant attribués aux terminaux, auquel cas les moments de début transmis par la station de base (1 à 3) des mêmes séquences de signalisation présentent respectivement un intervalle entre eux qui dépend de la propriété de canal déterminée respectivement entre le terminal correspondant (4 à 14) et la station de base (1 à 3).

**2.** Réseau sans fil selon la revendication 1, **caractérisé en ce que** la station de base (1 à 3) contient un matched filter (21) pour la production d'au moins une impulsion après la réception d'une séquence de signalisation et un détecteur d'impulsions (22) et

que le détecteur d'impulsions (22) est disposé pour détecter au moins une impulsion attribuée à un terminal (4 à 14) pendant une fenêtre de détection déterminée dont le moment de début et la durée sont déterminés par les propriétés de canal et le moment de début d'une séquence de signalisation.

3. Réseau sans fil selon la revendication 1, **caractérisé en ce qu'**un terminal (4 à 14) est agencé de manière à transmettre une séquence de Gold ou de Kasami comme séquence de signalisation en cas de souhait de signalisation à un moment préalablement déterminé par la station de base attribuée (1 à 3).

4. Réseau sans fil selon la revendication 1, **caractérisé en ce que** les moments de début des mêmes séquences de signalisation transmis par la station de base (1 à 3) aux terminaux attribués (4 à 14) présentent respectivement le même intervalle minimal l'un par rapport à l'autre.

5. Réseau sans fil selon la revendication 1, **caractérisé en ce que** la station de base (1 à 3) est agencée pour transmettre la séquence de signalisation à utiliser et son moment de début par l'intermédiaire d'un canal de commande à un terminal (4 à 14) afin de transmettre une information de signalisation binaire.

6. Réseau sans fil selon la revendication 1, **caractérisé en ce que** la station de base (1 à 3) est agencée pour transmettre la séquence de signalisation à utiliser et ses n points de début par l'intermédiaire d'un canal de commande à un terminal (4 à 14), n étant un nombre entier > 1 pour transmettre une information de signalisation de n bits.

7. Réseau sans fil selon la revendication 1, **caractérisé en ce qu'**une station de base (1 à 3) est agencée pour transmettre plusieurs séquences de signalisation différentes à utiliser à plusieurs groupes différents de terminaux (4 à 14).

8. Réseau sans fil selon la revendication 1, **caractérisé en ce qu'**une station de base (1 à 3) contient : un premier bloc de commande d'accès de canal (23) pour le prélèvement de données contenues dans les canaux, pour la transmission des données prélevées aux différents autres éléments de circuit et pour la détermination de la présence d'un souhait de signalisation par un terminal (4 à 14) ; et un deuxième bloc de commande d'accès de canal (24) pour l'introduction de données de différents éléments de circuit dans des canaux préalablement déterminés.

9. Réseau sans fil selon la revendication 1,

**caractérisé en ce qu'**un terminal (4 à 14) contient :

- un premier bloc de commande d'accès de canal (38) pour le prélèvement de données contenues dans des canaux préalablement déterminés et pour la transmission des données prélevées aux différents autres éléments de circuit ; et
- un deuxième bloc de commande d'accès de canal (39) pour l'introduction de données de différents éléments de circuit dans des canaux préalablement déterminés et pour la transmission d'au moins une séquence de signalisation en fonction d'un élément de commande temporelle.

10. Réseau sans fil selon la revendication 9, **caractérisé en ce qu'**un terminal (4 à 14) contient un générateur (41) avec une mémoire réinscriptible pour l'enregistrement de séquences de signalisation, le deuxième bloc de commande d'accès de canal (39) étant disposé pour la sélection d'une séquence de signalisation.

11. Réseau sans fil selon la revendication 1, **caractérisé en ce qu'**un terminal (4 à 14) est disposé pour la transmission d'une séquence de signalisation avec une amplitude plus élevée lorsque, après un intervalle de temps préalablement déterminé d'une séquence de signalisation préalablement transmise, aucun signal de retour n'est exécuté par la station de base attribuée (1 à 3).

12. Réseau sans fil selon la revendication 13, **caractérisé en ce qu'**un terminal (4 à 14) continue progressivement d'augmenter et de transmettre une séquence de signalisation avec une amplitude plus élevée jusqu'à ce qu'un signal de retour soit exécuté dans un intervalle de temps préalablement déterminé par la station de base attribuée (1 à 3) ou que la séquence de signalisation présente une amplitude maximale.

13. Réseau sans fil selon la revendication 12, **caractérisé en ce qu'**un terminal (4 à 14) transmet à plusieurs reprises une séquence de signalisation et qu'une station de base (1 à 3) est agencée pour transmettre un signal de retour au terminal (4 à 14) lorsque celui-ci a reçu la séquence de signalisation par l'intermédiaire de plusieurs cadres dans la fenêtre de détection attribuée au terminal (4 à 14).

14. Station de base dans un réseau sans fil en vue de l'échange de données utiles et de données de commande avec plusieurs terminaux attribués (4 à 14), la station de base (1 à 3) contenant un dispositif (21, 22) pour la corrélation d'une séquence de signalisation transmise par un terminal (4 à 14) et pour la détection de l'impulsion formée à partir d'une séquence de signalisation reçue et corrélée,
**caractérisée en ce**
**que** la station de base (1 à 3) est agencée pour transmettre, après l'enregistrement et la synchronisation de terminaux, la séquence de signalisation ou les séquences de signalisation utilisées pour la signalisation et leur moment de début par l'intermédiaire d'un canal de commande aux terminaux attribués, la séquence de signalisation ou les séquences de signalisation étant attribuées seulement à ladite station de base (1 à 3) émettrice et non à ses stations de base voisines et différents moments de début étant attribués aux terminaux dans un cadre de référence en vue de la transmission de la séquence de signalisation, auquel cas les moments de début transmis par la station de base (1 à 3) des mêmes séquences de signalisation présentent respectivement un intervalle entre eux qui dépend de la propriété de canal respectivement déterminée entre le terminal correspondant (4 à 14) et la station de base (1 à 3).

15. Procédé d'échange de données utiles et de données de commande dans un réseau sans fil entre au moins une station de base (1 à 3) et plusieurs terminaux attribués (4 à 14),
**caractérisé par** les étapes suivantes :

- après l'enregistrement et la synchronisation de terminaux (1 à 4), transmission d'une séquence de signalisation ou de plusieurs séquences de signalisation à utiliser pour la signalisation et de leurs moments de début par l'intermédiaire d'un canal de commande par la station de base (1-3) aux terminaux attribués à la station de base ; la séquence de signalisation ou les séquences de signalisation n'étant attribuées qu'à ladite station de base émettrice (1 à 3) et non à ses stations de base voisines et différents moments de début dans un cadre de référence pour la transmission de la séquence de signalisation étant attribués aux terminaux, auquel cas les moments de début des mêmes séquences de signalisation transmis par la station de base (1 à 3) présentent respectivement un intervalle entre eux qui dépend de la propriété de canal déterminée respectivement entre le terminal correspondant (4 à 14) et la station de base (1 à 3),
- transmission de la séquence de signalisation par un terminal en utilisant le moment de début attribué en cas de sollicitation d'un canal de transmission ;
- réception est corrélation d'une séquence de signalisation dans la station de base (1-3) et
- détection d'une impulsion formée à partir de la séquence de signalisation reçue et corrélée dans la station de base (1-3) ;

- attribution d'un canal de transmission au terminal de signalisation.

FIG. 1

FIG. 2

FIG. 3

FIG. 4

FIG. 5

FIG. 6

FIG. 7

FIG. 8

FIG. 9